(19) Europäisches Patentamt
European Patent Office
Office européen des brevets

(11) EP 1 887 219 A1

(12) **EUROPEAN PATENT APPLICATION**
published in accordance with Art. 153(4) EPC

(43) Date of publication:
**13.02.2008 Bulletin 2008/07**

(51) Int Cl.:
**F03D 1/06** (2006.01)

(21) Application number: **06743496.9**

(86) International application number:
**PCT/ES2006/070058**

(22) Date of filing: **11.05.2006**

(87) International publication number:
**WO 2006/128940 (07.12.2006 Gazette 2006/49)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.06.2005 ES 200501338**

(71) Applicant: **Esdras Automatica, S.L.
28231 Las Rozas de Madrid (ES)**

(72) Inventor: **TALAVERA MARTIN, JUAN ANTONIO
E-28231 Las Rozas De Madrid (ES)**

(54) **SUB-BLADE STRUCTURE FOR REDUCING BLADE WEIGHT IN WIND TURBINES**

(57) The invention relates to a sub-blade structure which can be used to reduce the weight of the blades in horizontal-axis wind turbines, whereby the blade is divided into blades having a smaller section (sub-blades). According to the invention, links are spaced out along the length of the sub-blades, such as to form a structure with a significant increase in the moment of inertia-to-weight ratio. The specific aerodynamic profile and division of each sub-blade enables the blade to be designed aerodynamically with more degrees of freedom. Said structures are particularly suitable for large wind turbines.

FIG. 2

EP 1 887 219 A1

## Description

### Technical field

The present memory describes a patent of invention relative to the blades of the Wind turbines of horizontal axis to reduce its weight and to increase its yield. The main field is the generation of electrical energy by means of wind turbines, particularly when these are of great size.

### Antecedents of the invention

We have seen in the last decades a spectacular development of the wind energy. Year after year the unitary power of the following model surpass the unitary power of the wind turbine preceding model. Greater power entails an increase of the diameter of the rotor. A greater diameter means greater length of the blades. This increase of the length is translated in an increase of loads and flexure moments in the blades particularly in their roots.

### Technical problem

In spite of the doubtless advances in the structural design and the materials, the blades increase their volume and weight of exponential form in relation to their length. This causes that it is the component with greater incidence in the cost of the large wind turbines.

### Technical solution

Given a flexure mode **M,** the force by surface unit, or stress, $\square$ that the material of a section in structure supports can be determined by means of the following expression:

$$\square = M*y_n/ I_n \qquad [1]$$

where $y_n$ is the distance to the neutral line in section of the structure that supports the force and $I_n$ is the moment of inertia from the same neutral line. The stress depends inversely on the moment of inertia. That is to say, for a certain flexure moment, the stress will be smaller whichever greater is the moment of inertia. On the other hand, if the flexure moment increases, necessarily we must increase the moment of inertia if we intend that the stress of the material does not grow.

The moment of inertia of the blade increases with the augment of the cross-sectional dimension of the blade. This is particularly important, for example, in the root of the blade where the external diameter grows exclusively due to this effect. The moment of inertia is the integral of the surface differential **dA** multiplied by its distance (square) $y_n$ from the neutral line as it is expressed in the following equation:

$$I_n = \int y_n{}^2 * dA \qquad [2]$$

An increase of the root diameter or the profile section of the blade makes the moment of inertia bigger by the increase of the surface as well as by the increase of the distance to the neutral line. Under this strategy, the relative position of the neutral line is not affected and keeps crossing through the centre of gravity of the section.

We can, nevertheless, increase the moment inertia without modifying the surface and the form, moving the neutral line. In this sense, the new moment of inertia $I_{nd}$ is expressed as follows:

$$I_{nd} = I_n + A*d^2 \qquad [3]$$

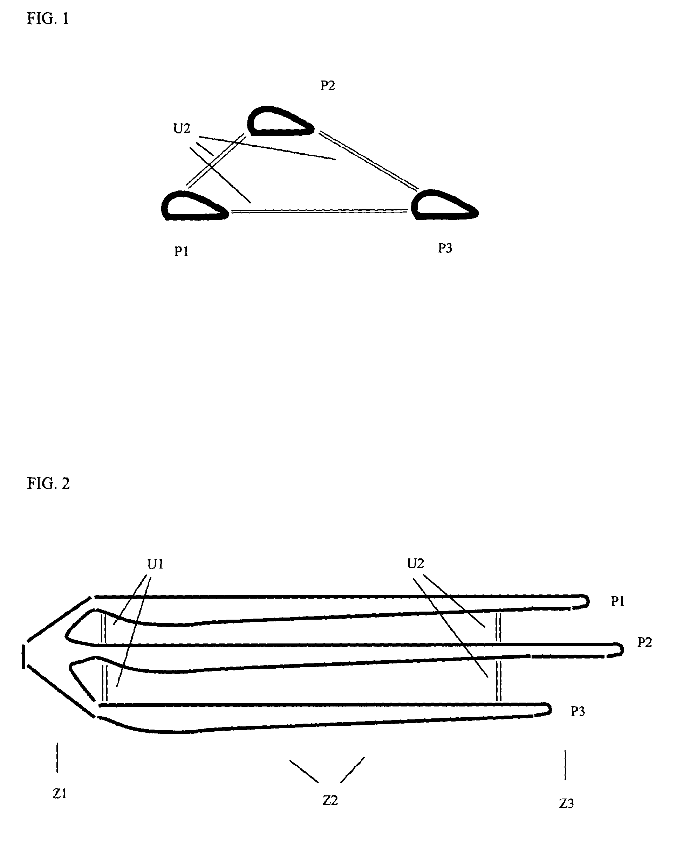

where **A** is the section area and **d** the distance that separate the neutral lines of $I_{nd}$ and $I_n$ supposing that these lines are parallel. Note that the distances to the neutral line $y_n$, which are modified by this displacement, also appear in the numerator of the equation [1] but its increase is compensated by the quadratic increase of the moment of inertia in the denominator. Thus, this strategy has the advantage that is able to increase the moment of inertia without increasing, in principle, the weight of the material. This is translated in the possibility of constructing slighter structures. The proposed invention is based on the use of this principle. The displacement of the neutral line is obtained dividing the blade in sub-blades and separating them as it is shown in FIG. 1. In this FIG.ure the blade is subdivided in three sub-blades (P1, P2, P3) separated a certain distance. Whichever greater is the separation distance, greater is the moment of inertia. Nevertheless, this is so if the sub-blades are firmly joined. This requires joins (U) located throughout the main axis of the structure. The joints increase their size, and its structural complexity, with the separation distance between the sub-blades. Therefore, an optimal separation distance exists that depends on the number of sub-blades, its space distribution, its profile, its length, the number of joints, as well as, of the materials.

**Advantages**

In addition, the flexure moment is not unique. There are several flexure and torsional moments related to different axes. Even more, it is necessary to consider in the design of the structure that there are also shear forces, as well as, stresses and strains that sum up over the moments. Finally, most of these forces and moments are induced by fundamentally variable loads (dynamic loads). Taking all these factors in consideration and with such parameters from design and materials, the proposed solution diminishes in more than 40% the weight of the blades in modem large wind turbines. Another key aspect to consider is the aerodynamic behaviour of the structure with sub-blades. In the first place, the joints introduce certain disturbances in the air flow. Fortunately, these are of local nature and they do not have an appreciable incidence in the global lift coefficient of blade $C_L$. Second, the specificity of each subblade should be considered. In the FIG. 1 they have been drawn equal but the sub-blades usually have different dimensions and profiles. Thus, sub-blades can have profiles with main function dictated by resistance of materials (i.e. circular, cable) and others with aerodynamic main function. They can continuous or be formed connecting several segments. In addition, sub-blades can be focused to obtain the maximum lift coefficient $C_L$ at low speeds of wind while others at average speeds of wind. Finally, the set of sub-blades forms a global structure where each element is influenced by the rest. Thus, for example, the separation of the sub-blades that may vary along their length plays a significant role in all the aerodynamic coefficients of the blade. All of this may increase the degrees of freedom in the aerodynamic design which could be translated in a substantial improvement of the aerodynamic efficiency of the wind turbines.

Another advantageous consequence from increasing the moment of inertia with respect to the mass is the vibration behaviour. The amplitudes of deformations are reduced and, consequently, the aero-elastic properties are improved in the proposed structure.

**Brief description of the drawings**

FIG. 1 shows to an example of section of the propose structure (blade) with three sub-blades (P1, P2, P3) and the joint (U2) among them.

FIG. 2 shows an example of complete structure with its three zones (Z1, Z2, Z3). The represented termination zone (Z3) is of open type. The FIG. 2 has illustrative character and the elements are drawn without keeping their scales.

**Preferred embodiments of the invention**

The structures usually are formed, although not always, by more than two sub-blades to support better loads and moments in different axes and directions. The FIG.1 illustrates an example of structure section with three sub-blades of equal profile and dimension. Usually, the sub-blades could be with different size and profile. Even some may have functions of structural support and for that reason they are with more appropriate sections for that function, such as circular sections, ellipsoids or others. Still in these cases, since they influence on the media fluid, a factor always important to consider is their aerodynamic coefficients. The complete structure is made up of three zones, as FIG.2 illustrates. The first zone, Z1 is the one of expansion. In this zone the structure transforms from the circular and more reduced dimensions of the root to a section formed by sub-blades and with sufficiently great separation distances among them. The central zone Z2 is the one of greatest length and is where the structure has its main characteristic section. Finally, Z3 is the zone of termination. This zone can be of two types: closed and opened. In closed the sub-blades they end up being united in the outer end. In the open completion that has been illustrated in FIG. 2, the sub-blades have individual ends with equal or different length. The separation distances among them can be reduced, keep constant or increase, following criteria of aerodynamic optimization. It is important to consider for the correct interpretation of the FIG. 2 that the sub-blades P1, P2 and P3 are not placed in a same plane.

This structure of sub-blades is particularly appropriate to be used in the system of control DBB described in patent ES2216731. Under this system, the blades are divided in segments and these segments can be overlapped dynamically. If the system is based on using a structure of sub-blades, then some of the sub-blades can have function of support and/or guidance in the displacement of the movable segments. These movable segments can be segments of blade, or, segments of subblade.

On the other hand, the structure also modifies the present methods of manufacture and transport of blades since it allows to be formed assembling the different constituent parts: zone 1 of the root, sub-blades and joints.

Finally one is due to mention, like in conventional blades, that the complete structure may have a torsion angle throughout its length. Even more, each subblade may have its own individual torsion angle, which opens new possibilities of aerodynamic design.

The terms in which this memory has been described will have to be always taken with ample and not limited character. The materials, form and disposition of the elements will be susceptible of variation as long as it does not suppose an alteration of the essence of the invention.

**Claims**

**1.** - Structure of sub-blades for reduction of the weight of the blades in wind turbines of horizontal axis comprising:

two or more space separated sub-blades,
a number of sub-blades joints placed along the structure main length,
a zone of expansion that begins from the root and where the structure branches from an unitary section into separate sub-blades with increasing separation distance.

**2.** - Structure of sub-blades for reduction of the weight of the blades in wind turbines as in claim 1 which has a number of sub-blades that serve as support or guidance or support and guidance of a number of blade segments or of segments of sub-blade that may slide between them.

**3.** - Structure of sub-blades for reduction of the weight of the blades in wind turbines as in claim 1, which has the separation between sub-blades that varies in a number of zones.

FIG. 1

P2

U2

P1

P3

FIG. 2

U1

U2

P1

P2

P3

Z1

Z2

Z3

## INTERNATIONAL SEARCH REPORT

| | International application No. |
|---|---|
| | PCT/ ES 2006/070058 |

**A. CLASSIFICATION OF SUBJECT MATTER**

*F03D 1/06* (2006.01)

According to International Patent Classification (IPC) or to both national classification and IPC

**B. FIELDS SEARCHED**

Minimum documentation searched (classification system followed by classification symbols)

F03D

Documentation searched other than minimum documentation to the extent that such documents are included in the fields searched

Electronic data base consulted during the international search (name of data base and, where practicable, search terms used)

CIBEPAT, EPODOC, WPI, PAJ

**C. DOCUMENTS CONSIDERED TO BE   RELEVANT**

| Category* | Citation of document, with indication, where appropriate, of the relevant passages | Relevant to claim No. |
|---|---|---|
| X | US 4081221 A (ANDREWS) 28.03.1978; the whole document. | 1, 3 |
| Y | | 2 |
| Y | ES 2216731 A1 (ESDRAS AUTOMÁTICA) 16.10.2004; the whole document; cited in the application. | 2 |
| X | EP 937893 A2 (DEUTSCHES ZENTRUM FÜR LUFT- UND RAUMFAHRT) 25.08.1999; paragraphs [15-19], [24-26]; figures 1-5, 10-14. | 1, 3 |
| Y | | 2 |
| Y | US 2003/0223868 A1 (DAWSON et al.) 04.12.2003; paragraphs [18-19], [51-52]; figures 1-2. | 2 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art, which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents, such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 01. August. 2006          (01.08.2006) | (09-08-2006) |

| Name and mailing address of the ISA/ | Authorized officer |
|---|---|
| O.E.P.M. | L. Dueñas Campo |
| Paseo de la Castellana, 75 28071 Madrid, España. Facsimile No.   34 91 3495304 | Telephone No. + 34 91 3495342 |

Form PCT/ISA/210 (second sheet) (April 2005)

**EP 1 887 219 A1**

## INTERNATIONAL SEARCH REPORT

| | International application No. |
|---|---|
| | PCT/ES 2006/070058 |

| C (continuation). | DOCUMENTS CONSIDERED TO BE  RELEVANT | |
|---|---|---|
| Category* | Citation of documents, with indication, where appropriate, of the relevant passages | Relevant to claim No. |
| X | EP 64742 A2 (FICHT) 17.11.1982; page 2, lines 10-17; page 3, line 19 - page 4, line 16; figures 1-2. | 1 |
| Y | | 2 |
| Y | WO 03/036082 A1 (CLIPPER WINDPOWER TECHNOLOGY) 01.05.2003; page 2, lines 19-24; page 5, lines 2-8; figures 1a-1e. | 2 |
| X | FR 2609506 A1 (LEPOIX) 15.07.1988; page 2, lines 6-18; page 4, lines 16-22; figures 1-2, 8-11. | 1, 3 |
| A | US 4329116 A (LJUNGSTRÖM) 11.05.1982; the whole document. | 1 |

Form PCT/ISA/210 (continuation of second sheet) (April 2005)

7

INTERNATIONAL SEARCH REPORT

Information on patent family members

International application No.

PCT/ ES 2006/070058

| Patent document cited in the search report | Publication date | Patent family member(s) | Publication date |
|---|---|---|---|
| US 4081221 A | 28.03.1978 | NONE | |
| ES 2216731 A1 | 16.10.2004 | WO 2006/008327 A | 26.01.2006 |
| EP 0937893 A2 | 25.08.1999 | DE 19807193 C<br>EP 19990100991 | 27.05.1999<br>21.01.1999 |
| US 2003/0223868 A1 | 04.12.2003 | US 6902370 B<br>CA 2494119 A<br>WO 03/102414 A<br>AU 2003247489 A<br>EP 1534952 A<br>EP 20030756398<br>US 2005/0285406 A | 07.06.2005<br>11.12.2003<br>11.12.2003<br>19.12.2003<br>01.06.2005<br>04.06.2003<br>29.12.2005 |
| EP 64742 A2 | 17.11.1982 | EP 19820103993<br>DE 3117995 A | 07.05.1982<br>25.11.1982 |
| WO 03/036082 A1 | 01.05.2003 | US 2003/0044274 A<br>US 6726439 B<br>CA 2465271 A<br>EP 1442216 A<br>EP 20020776321<br>BR 0213558 A | 06.03.2003<br>27.04.2004<br>01.05.2003<br>04.08.2004<br>24.10.2002<br>26.10.2004 |
| FR 2609506 A1 | 15.07.1988 | NONE | |
| US 4329116 A | 11.05.1982 | DK 414679 A<br>SE 7810504 A<br>SE 414073 B<br>CA 1141668 A | 07.04.1980<br>07.04.1980<br>07.07.1980<br>22.02.1983 |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• ES 2216731